(19) Europäisches Patentamt
European Patent Office
Office européen des brevets

(11) Publication number: **0 376 336 B1**

# (12) EUROPEAN PATENT SPECIFICATION

(45) Date of publication of patent specification: **16.02.94**

(51) Int. Cl.5: **C08L 35/00**, C08L 59/02, C08L 67/02, C08L 69/00, C08L 71/12, C08L 77/00, C08L 81/02, C08L 81/06

(21) Application number: **89124113.5**

(22) Date of filing: **28.12.89**

## (54) N-substituted maleimide polymer composition.

(30) Priority: **28.12.88 JP 328961/88**

(43) Date of publication of application:
**04.07.90 Bulletin 90/27**

(45) Publication of the grant of the patent:
**16.02.94 Bulletin 94/07**

(84) Designated Contracting States:
**BE DE FR GB IT NL**

(56) References cited:
**US-A- 4 491 647**
**US-A- 4 497 928**

**CHEMICAL ABSTRACTS, vol. 102, no. 4, 28 January 1985 Columbus, Ohio, USA & JP-A-59 147 041 (TORAY INDUSTRIES INC.) 23-08-1984**

**CHEMICAL ABSTRACTS, vol. 106, no. 4, 26 January 1987 Columbus, Ohio, USA & JP-A-61 162 509 (NIPPON SHOKUBAI CO., LTD.) 23-07-1986**

(73) Proprietor: **NIPPON OIL AND FATS COMPANY, LIMITED**
**10-1, Yuraku-cho 1-chome**
**Chiyoda-ku Tokyo(JP)**

(72) Inventor: **Kato, Kenji**
**2-14-3, Takasaki**
**Oita-shi Oita-ken(JP)**
Inventor: **Koinuma, Yasumi**
**2-26-1-105, Akeno Nishi**
**Oita-shi Oita-ken(JP)**
Inventor: **Doiuchi, Kazunori**
**2-26-1-103, Akeno Nishi**
**Oita-shi Oita-ken(JP)**
Inventor: **Kinoshita, Seigo**
**1-4-14, Takamatsu**
**Oita-shi Oita-ken(JP)**
Inventor: **Haruta, Yukinori**
**2-7-2, Akeno Nishi**
**Oita-shi Oita-ken(JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

(74) Representative: **Wehnert, Werner, Dipl.-Ing. et al**
**Patentanwälte**
**Dipl.-Ing. Graalfs,**
**Dipl.-Ing. Hauck,**
**Dipl.-Ing. Wehnert,**
**Dr.-Ing. Döring**
**Dr.rer.nat. Beines**
**Mozartstrasse 23**
**D-80336 München (DE)**

## Description

BACKGROUND OF THE INVENTION:

The present invention relates to an N-substituted maleimide polymer composition which has excellent thermal resistance, resistance against impact strength, mechanical strength and moldability.

It has hitherto been known that a resin having improved thermal resistance is prepared by copolymerizing an N-substituted maleimide with other vinyl monomers. For example, Japanese Patent Publication No. 9753/1968 discloses that a copolymer of phenyl maleimide and methyl methacrylate is useful for a molding material, and Japanese Patent Publication No. 12433/1969 discloses that a copolymer of vinyl chloride and a maleimide compound is useful for a molding material. "KOBUNSHI KAGAKU", Vol. 28., Page 330 (1971) and other publications disclose processes for preparing homopolymers of N-substituted maleimide and that the thus prepared N-maleimide polymers have resistance to extremely high temperature.

CHEMICAL ABSTRACTS, vol. 102, no. 4, 28th January 1985 discloses a blend composition containing a special graft polymer and an N-phenylmaleimide homopolymer. CHEMICAL ABSTRACTS, vol. 106, no. 4, 26th January 1987 discloses a blend composition comprising copolymers containing methyl methacrylate and N-substituted maleimide polymer. US-A-4,491,647 discloses a blend composition containing a maleimide copolymer and polycarbonate. US-A-4,497,928 discloses a blend composition containing a maleimide copolymer and polyarylene sulfide.

However, the thermal resistance of the known copolymer of the N-substituted maleimide and the vinyl monomer is still unsatisfactory. Although the knwon N-substituted maleimide copolymer has resistance to high temperature, it is extremely brittle and only has low mechanical strength, such as resistance against impact strength or tensile strength, so that it cannot be used as a molding material.

SUMMARY OF THE INVENTION:

A principal object of this invention is to provide an N-substituted maleimide polymer composition which has well-balanced properties such as thermal resistance, resistance against impact strength and mechanical strength and thus can be used as a molding material.

The above and other objects of the invention will become apparent from the following description.

An N-substituted maleimide polymer composition comprising 20 to 90 parts by weight of an N-substituted maleimide polymer and 80 to 10 parts by weight of a thermoplastic resin, a monomer forming said N-substituted maleimide polymer being represented by the formula:

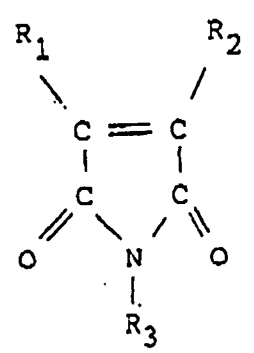

wherein $R_1$ and $R_2$ each stand for a hydrogen atom, a halogen atom or a methyl group; and $R_3$ stands for a straight chain or branched chain alkyl group having 1 to 18 carbon atoms, a cycloalkyl group having 3 to 12 carbon atoms, an alkyl-substituted cycloalkyl group, an aryl group having 6 to 18 carbon atoms or an aralkyl group having 7 to 18 carbon atoms,
characterized in that said thermoplastic resin is selected from a polyphenylene ether polymer, a polyoxymethylene polymer, a polyester polymer, a polyamide polymer and mixtures thereof.

PREFERRED EMBODIMENTS OF THE INVENTION:

The present invention will now be described in detail.

The characteristic feature of the N-substituted maleimide polymer composition, according to the invention, resides in that the N-substituted maleimide polymer composition contains a specifically defined thermoplastic resin as essential components.

The N-substituted maleimide polymer used in this invention is a polymer of one or more N-substituted maleimide compounds represented by the fomula (I):

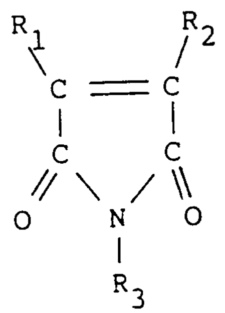

----- (I)

In the formula (I), $R_1$ and $R_2$ each stand for a hydrogen atom, a halogen atom or a methyl group; and $R_3$ stands for a straight chain or branched chain alkyl group having 1 to 18 carbon atoms, a cycloalkyl group having 3 to 12 carbon atoms, an alkyl-substituted cycloalkyl group, an aryl group having 6 to 18 carbon atoms or an aralkyl group having 7 to 18 carbon atoms. It is not preferred that $R_3$ has carbon atoms more than the range as defined above, since preparation of the N-substituted polymer becomes difficult. Specific examples of preferred N-substituted maleimide compound, which may be used in this invention, include N-methyl maleimide, N-ethyl maleimide, N-n-propyl maleimide, N-i-propyl maleimide, N-n-butyl maleimide, N-i-butyl maleimide, N-sec-butyl maleimide, N-t-butyl maleimide, N-n-hexyl maleimide, N-cyclohexyl maleimide, N-2-methylcyclohexyl maleimide, N-2-ethylhexyl maleimide, N-decyl maleimide, N-dodecyl maleimide, N-cyclododecyl maleimide, N-octadecyl maleimide, N-phenyl maleimide, N-2-methylphenyl maleimide, N-p-i-propylphenyl maleimide, N-2,4-dimethylphenyl maleimide, N-benzyl maleimide, N-methyl-$\alpha$-methyl maleimide, N-phenyl-$\alpha$-methyl maleimide, N-phenyl-$\alpha$-chloro maleimide, N-phenyl-$\alpha,\beta$-dimethyl maleimide. These N-substituted maleimide compounds may be polymerized singly or in combination.

In the preparation of the N-substituted maleimide polymer by polymerizing one or more of the aforementioned N-substituted maleimide compounds, one or a mixture of two or more of the N-substituted maleimide compounds is polymerized in the presence of a polymerization initiator by a known process, such as suspension polymerization, solution polymerization, emulsion polymerization or bulk polymerization. More sepcifically, it is preferred to effect polymerization at a temperature of, for example, from 0 to 120 °C, particularly preferably from 40 to 100 °C, for 3 to 12 hours. Known organic peroxides, azo compounds and the like may be used as the polymerization initiators. It is preferred that the polymerization initiator be used in an amount of 0.01 to 5 wt%, based on the weight of the N-substituted maleimide compound. It is preferred that the resultant N-substituted maleimide has a molecular weight of a weight average molecular weight of from 2,000 to 500,000. The molecular weight of less than 2,000 is too small to obtain satisfactory thermal resistance. On the contrary, if the molecular weight is more than 500,000, the compatibility with other thermoplastic resins becomes poor and the moldability is deteriorated. The weight average molecular weight can be controlled by adding a polymerization modifier, such as mercaptans, at the polymerization step. The weight average molecular weight may be determined by the limiting viscosity method or by the gel permeation chromatography (hereinafter briefly referred to as "GPC").

The thermoplastic resins added to the N-substituted maleimide polymer, according to this invention, include a polyphenylene ether polymer, a polyoxymethylene polymer, a polyester polymer, a polyamide polymer and mixtures thereof. Preferably, each of these polymers has a molecular weight of not more than 10,000.

The polyphenylene ether polymer, which may be used in this invention preferably has a structural unit represented by the following formula (VI):

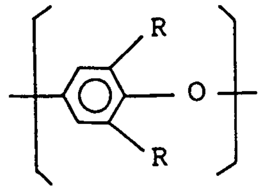 ----- (VI)

In the formula (VI), R stands for an alkyl group having 1 to 4 carbon atoms. A preferable example of the polyphenylene ether polymer having the structural unit as represented by the formula (VI) is poly(2,6-dimethyl-1,4-phenylene)ether.

Preferable examples of the polyoxymethylene polymer, which may be used in this invention, are a homopolymer and a copolymer of formaldehyde, a homopolymer and a copolymer of trioxane, and mixtures thereof.

The polyester polymer, which may be used in this invention, preferably has a structural unit represented by the following formula (VIII):

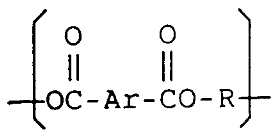 ----- (VIII)

In the formula (VIII), Ar stands for a phenylene group or an alkyl-substituted phenylene group; and R stands for an alkylene group or a cycloalkylene group. Preferable examples of the polyester polymers having the structural unit represented by the formula (VIII) are polyethylene terephthalate and polybutylene terephthalate.

The polyamide polymer, which may be used in this invention, preferably has a structural unit repesented by the following formula (IX) or (X):

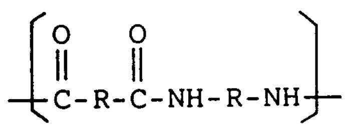 ----- (IX)

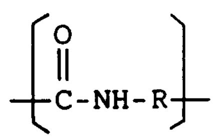 ----- (X)

In the formulae (IX) and (X), R stands for an alkylene group. Preferable examples of the polyamide polymer having the structural unit represented by the formula (IX) or (X) are polycaprolactam and polyhexamethyleneadipamide.

Any one or more of commercially available thermoplastic resin may be used as the thermoplastic resins added to the N-substituted maleimide polymer in the present invention.

In the present invention, 20 to 90 parts by weight of the N-substituted maleimide polymer is mixed with 80 to 10 parts by weight of the thermoplastic resin. If the content of the N-substituted maleimide polymer is more than 90 parts by weight, namely the content of the thermoplastic resin is less than 10 parts by weight, the resistance against impact strength or mechanical strength of the resultant composition is seriously lowered. On the contrary, if the content of the N-substituted maleimide polymer is less than 20 parts by weight, namely the content of the thermoplastic resin is more than 80 parts by weight, the thermal resistance becomes poor to unsatisfactory level.

To the N-substituted maleimide polymer composition, according to this invention, there may be added a reinforcing material, such as silica, carbon black, clay, glass fibers, organic fibers or calcium carbonate, a filler, an antioxidant, an ultraviolet ray absorbent, a stabilizer, a pigment, a lubricant, a flame retardant or other additives.

In preparation of the N-substituted maleimide polymer composition of the invention, it is preferred that respective components blended in a desired ratio be mixed in the molten state by using a variety of mixers which are used for mixing ordinary mixtures of polymers, such as uniaxial or multiaxial screw type extruders, mixing rollers, banbury mixers or kneaders.

The N-substituted maleimide polymer composition of the invention may be molded by any of the known molding processes, such as extrusion molding, injection molding or blow molding, to prepare a finished product of various forms including a sheet, a film and a foamed product.

The N-substituted maleimide polymer composition of this invention contains one or more of the specifically defined thermoplastic resins to improve the brittleness of the N-substituted maleimide polymer, and thus can be used as a resinous molding material which is well-balanced in thermal resistance, resistance against impact strength and other mechanical strength.

EXAMPLES OF THE INVENTION:

The present invention will be described more in detail with reference to specific Examples thereof and Reference Examples. However, it should be noted here that the present invention is not limited to the following Examples. In the following Examples and Reference Examples, "part" stands for "part by weight".

Reference Example 1 : Preparation of N-cyclohexyl Maleimide Polymer

In a four-neck flask provided with a stirrer, a thermometer, a nitrogen gas introduction tube and a Dimroth condenser, 1 part of a partially hydrolysed polyvinyl alcohol and 1 part of sodium lauryl sulfonate were added to 400 parts of deionized water to be dissolved in the deionized water. Then, a solution containing 100 parts of N-cyclohexyl maleimide dissolved in 100 parts of methyl ethyl ketone and 0.3 part of lauryl mercaptan were charged into the flask and stirred to obtain a suspension. A solution containing 1.0 part of dibenzoyl peroxide dissolved in 5 parts of methyl ethyl ketone was added, as a polymerization initiator, to the suspension and the temperature of the system was raised to 80°C to initiate polymerization. After stirring for 9 hours, the content in the flask was cooled to room temperature, and the suspension was filtered and washed with water, followed by drying in vacuum, to obtain an N-cylohexyl maleimide polymer. The yield was 84 parts, and the weight average molecular weight of the polymer was 38,000. The thus obtained polymer is denoted by "Polymer A".

The Polymer A was pelletized using a double axial 40 mm extruder, and then the pellets were molded by a press to prepare test specimens. The tensile strength at 70°C of the test specimen was 20 $kg/cm^2$, and the Izod impact strength was 0.3 kg•cm/cm.

Reference Example 2: Preparation of N-t-butyl Maleimide Polymer

Following the procedures as in Reference Example 1, except that N-t-butyl maleimide was used in place of N-cyclohexyl maleimide, an N-t-butyl maleimide polymer (hereinafter referred to as "Polymer C") having a weight average molecular weight of 80,000 was prepared, and test specimens were prepared therefrom similarly as in Reference Example 1. The tensile strength at 70°C of the test specimen was 28 $kg/cm^2$, and the Izod impact strength was 0.4 kg•cm/cm.

Examples 1 to 4

After 100 parts of the Polymer A as prepared by Reference Example 1 was mixed with 100 parts of each of the thermoplastic resins as set forth in Table 1, the mixture was pelletized using a double axial extruder and each test specimen was then prepared from the pellets by molding the same by a press. The tensile strength at 70°C and the Izod impact strength of each test specimen were measured. The results are shown in Table 1 while calculating the measured values into the ratios to the measured values in Reference Example 1.

Example 5

130 parts of the Polymer C as prepared by Reference Example 2 were mixed with 70 parts of a polyester resin (Trade Name: "PBT 1041"; produced by Toray Industries Inc.), and test specimens were prepared. Tests were conducted similarly to Examples 1 to 4. The results are shown in Table 1 while calculating the measured values into the ratios to the measured values in Reference Example 2.

Table 1

| | Mixed Thermoplastic Resin (Trade Name) | Ratio in Tensile Strength to Maleimide Homopolymer | Ratio in Resistance against Impact Strength to Maleimide Homopolymer |
|---|---|---|---|
| Example 1 | Polyoxymethylene ("DELRIN"; produced by E. I. du Pont de Nemours & Co. Inc.) | 2.1 | 2.2 |
| Example 2 | Polyester ("PBT 1041"; produced by Toray Industries Inc.) | 2.8 | 5.5 |
| Example 3 | Polyamide ("AMYLANE"; produced by Toray Industries Inc.) | 3.3 | 5.8 |
| Example 4 | polyphenylene Ether ("XYRON 400H"; produced by Asahi Chemical Industry Co., Ltd.) | 3.4 | 8.5 |
| Example 5 | Polyester ("PBT 1041"; produced by Toray Industries Inc.) | 1.9 | 3.1 |

As will be seen from the results set forth in Table 1, the N-substituted maleimide polymer compositions according to the invention are considerably improved in tensile strength under heating condition over that of the homopolymer of an N-substituted maleimide, which reveals that the thermal resistance and mechanical strength of the polymer compositions of this invention are superior over those of the homopolymer of an N-substituted maleimide.

## Claims

**1.** An N-substituted maleimide polymer composition comprising 20 to 90 parts by weight of an N-substituted maleimide polymer and 80 to 10 parts by weight of a thermoplastic resin, a monomer forming said N-substituted maleimide polymer being represented by the formula:

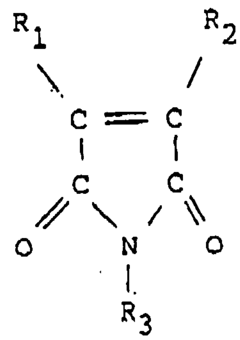

wherein $R_1$ and $R_2$ each stand for a hydrogen atom, a halogen atom or a methyl group; and $R_3$ stands for a straight chain or branched chain alkyl group having 1 to 18 carbon atoms, a cycloalkyl group having 3 to 12 carbon atoms, an alkyl-substituted cycloalkyl group, an aryl group having 6 to 18 carbon atoms or an aralkyl group having 7 to 18 carbon atoms,
characterized in that said thermoplastic resin is selected from a polyphenylene ether polymer, a polyoxymethylene polymer, a polyester polymer, a polyamide polymer and mixtures thereof.

**2.** The composition according to claim 1, wherein said polyphenylene ether polymer has a structural unit represented by the following formula (VI):

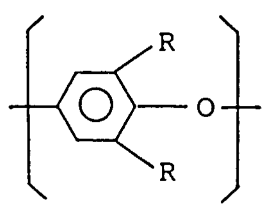

----- (VI)

wherein R stands for an alkyl group having 1 to 4 carbon atoms.

**3.** The composition according to claim 1, wherein said polyoxymethylene polymer is selected from a homopolymer and a copolymer of formaldehyde, a homopolymer and a copolymer of trioxane, and mixtures thereof.

**4.** The composition according to claim 1, wherein said polyester polymer has a structural unit represented by the following formula (VIII):

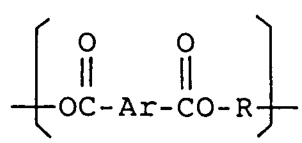

----- (VIII)

wherein Ar stands for a phenylene group or an alkyl-substituted phenylene group; and R stands for an alkylene group or a cycloalkylene group.

**5.** The composition according to claim 1, wherein said polyamide polymer has a structural unit selected from the group consisting of the following formula (IX) or (X):

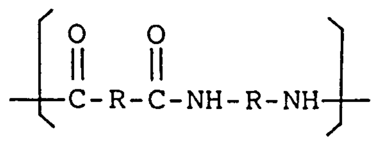

----- (IX)

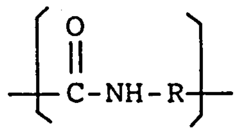

----- (X)

wherein R stands for an alkylene group.

**Patentansprüche**

1. N-substituierte Maleimidpolymer-Zusammensetzung mit 20 bis 90 Gewichtsteilen eines N-substituierten Maleimidpolymers und 80 bis 10 Gewichtsteilen eines thermoplastischen Harzes, wobei ein Monomer, welches das N-substituierte Maleimidpolymer bildet, durch die folgende Formel dargestellt ist:

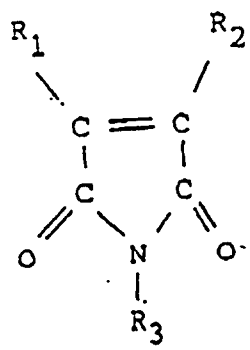

worin $R_1$ und $R_2$ jeweils für ein Wasserstoffatom, ein Halogenatom oder eine Methylgruppe steht und $R_3$ für eine gerade Kette oder eine verzweigte Kette einer Alkylgruppe mit 1 bis 18 Kohlenstoffatomen, eine Cycloalkylgrupe mit 3 bis 12 Kohlenstoffatomen, eine Alkylsubstituierte Cycloalkylgruppe, eine Arylgruppe mit 6 bis 18 Kohlenstoffatomen oder für eine Aralkylgruppe mit 7 bis 18 Kohlenstoffatomen steht, dadurch gekennzeichnet, daß das thermoplastische Harz aus einem Polyphenylenetherpolymer, einem Polyoxymethylenpolymer, einem Polyesterpolymer, einem Polyamidpolymer sowie deren Gemische ausgewählt ist.

2. Zusammensetzung nach Anspruch 1, worin das Polyphenylenetherpolymer eine Struktureinheit hat, welche durch die folgende Formel (VI) dargestellt ist:

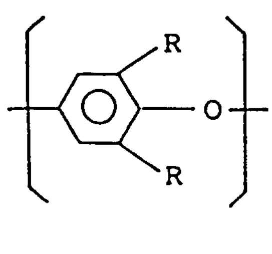

(VI)

worin R für eine Alkylgruppe mit 1 bis 4 Kohlenstoffatomen steht.

3. Zusammensetzung nach Anspruch 1, worin das Polyoxylenmethylenpolymer aus einem Homopolymer und einem Copolymer von Formaldehyd, einem Homopolymer und einem Copolymer von Trioxan

sowie deren Gemische ausgewählt ist.

**4.** Zusammensetzung nach Anspruch 1, worin das Polyesterpolymer eine Struktureinheit hat, welche durch die folgende Formel (VIII) dargestellt ist.

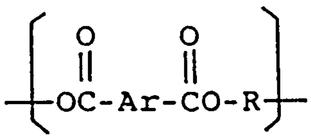

(VIII)

worin Ar für eine Phenylengruppe oder eine Alkylsubstituiierte Phenylengruppe steht und R für eine Alkylengruppe oder eine Cycloalkylengruppe steht.

**5.** Zusammensetzung nach Anspruch 1, worin das Polyamidpolymer eine Struktureinheit aufweist, die aus der Gruppe ausgewählt ist, welche aus den folgenden Formeln (IX) oder (X) besteht:

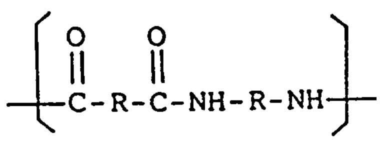

(IX)

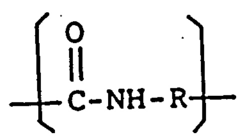

(X)

worin R für eine Alkylengruppe steht.

## Revendications

**1.** Composition à base d'un polymère de maléimide N-substitué comprenant 20 à 90 parties en poids d'un polymère de maléimide N-substitué et 80 à 10 parties en poids d'une résine thermoplastique, un monomère formant ledit polymère de maléimide N-substitué étant représenté par la formule:

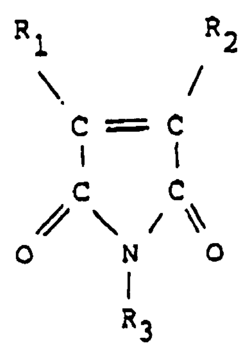

dans laquelle $R_1$ et $R_2$ représentent chacun un atome d'hydrogène, un atome d'halogène ou un groupe méthyle; et $R_3$ représente un groupe alkyle à chaîne ramifiée ou à chaîne droite ayant de 1 à 18 atomes de carbone, un groupe cycloalkyle ayant de 3 à 12 atomes de carbone, un groupe cycloalkyle substitué par des groupes alkyle, un groupe aryle ayant de 6 à 18 atomes de carbone ou un groupe aralkyle ayant de 7 à 18 atomes de carbone,

caractérisée en ce que ladite résine thermoplastique est choisie parmi un polymère poly(éther de phénylène), un polymère polyoxyméthylène, un polymère polyester, un polymère polyamide et leurs mélanges.

2. Composition selon la revendication 1, dans laquelle ledit polymère poly(éther de phénylène) possède un motif structurel représenté par la formule suivante (VI):

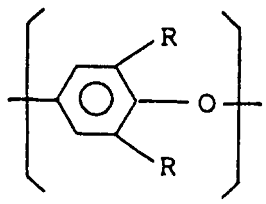

----- (VI)

dans laquelle R représente un groupe alkyle ayant de 1 à 4 atomes de carbone.

3. Composition selon la revendication 1, dans laquelle ledit polymère polyoxyméthylène est choisi parmi un homopolymère et un copolymère de formaldéhyde, un homopolymère et un copolymère de trioxanne, et leurs mélanges.

4. Composition selon la revendication 1, dans laquelle ledit polymère polyester possède un motif structurel représenté par la formule suivante (VIII):

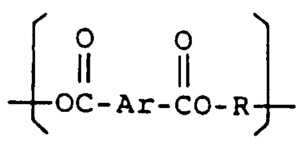

----- (VIII)

dans laquelle Ar représente un groupe phénylène ou un groupe phénylène substitué par des groupes alkyle; et R représente un groupe alkylène ou un groupe cycloalkylène.

5. Composition selon la revendication 1, dans laquelle ledit polymère polyamide possède un motif structurel choisi dans le groupe formé par la formule suivante (IX) ou (X):

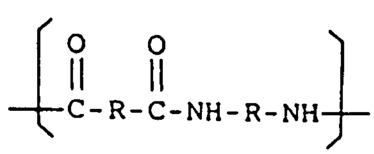

----- (IX)

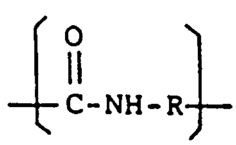

----- (X)

dans laquelle R représente un groupe alkylène.